# EUROPÄISCHE PATENTSCHRIFT

(11) **EP 2 481 630 B1**
(45) Veröffentlichungstag und Bekanntmachung des Hinweises auf die Patenterteilung: **10.10.2018**
(21) Anmeldenummer: 12151582.9
(22) Anmeldetag: 18.01.2012
(51) Int. Cl.: F16F 9/06

(54) **Fahrzeugschwingungsvorrichtung, Fahrzeugsitz oder Fahrgastzelle bzw. Fahrzeugkabine eines Fahrzeuges**
Vehicle vibration device, vehicle seat or interior or cabin of a vehicle
Dispositif d'oscillation de véhicule, siège de véhicule ou cellule passager ou cabine de véhicule d'un véhicule

(30) Priorität: 26.01.2011 DE 102011009530
(43) Veröffentlichungstag der Anmeldung: 01.08.2012
(73) Patentinhaber: GRAMMER AG, 92224 Amberg (DE)
(72) Erfinder: Kolb, Jens, D-92281 Königstein (DE); Haller, Erwin, D-92262 Birgland (DE)
(74) Vertreter: Hannke, Christian

(56) Entgegenhaltungen:
- EP-A1- 1 947 361
- DE-A1- 2 851 129
- DE-B3-102005 011 856
- DE-C- 919 150
- SU-A1- 685 528
- US-A- 4 351 556
- US-A- 5 711 514
- US-A1- 2009 218 867

## Beschreibung

Die Erfindung betrifft eine Fahrzeugschwingungsvorrichtung mit einer Horizontalschwingungseinrichtung und mit einer Einrichtung zur Stabilisierung einer Horizontalmittellage der Horizontalschwingungseinrichtung, bei welcher die Horizontalschwingungseinrichtung in Fahrzeuglängsrichtung und/oder in Fahrzeugbreitenrichtung horizontal schwingbar angeordnet ist und bei welcher die Stabilisierungseinrichtung ein Federelement umfasst.

Des Weiteren betrifft die Erfindung einen Fahrzeugsitz oder eine Fahrgastzelle bzw. Fahrzeugkabine eines Fahrzeugs.

Insbesondere bei Fahrzeugsitzführungssystemen ist es bekannt, Längs- oder Seitenhorizontalfederungen einzusetzen, um hauptsächlich für einen Fahrzeugführer einen verbesserten Fahrkomfort gewährleisten zu können, speziell wenn sich ein Fahrzeug auf unwegsamem Terrain bewegt. Besonders bei einem unwegsamen Terrain geschieht eine Schwingungsanregung häufig und intensiv; beispielsweise bei einem Überfahren einer größeren Fahrbahnunebenheit, bei welcher etwa ein Sitzteil des Fahrzeugsitzführungssystems in Fahrtrichtung ausgelenkt wird. Um in diesem Zusammenhang auch die Gefahr zu verringern, dass sich ein derartiges Fahrzeugsitzführungssystem bei überlagerter Anregung kritisch aufschaukelt, werden neben den Längs- oder Seitenhorizontalfederungen auch separate Dämpfer in das Fahrzeugsitzführungssystem eingebaut. Dies bedingt jedoch auch mehr Platzbedarf für die einzelnen Bauteile, der oftmals nicht oder nur in einem unzureichenden Maße zur Verfügung steht. Zumal die Längs- oder Seitenhorizontalfederungen und derartiger Dämpfer mit entsprechenden Mechaniken auch funktionsfähig miteinander verbunden werden müssen. Häufig führt dies zu einem komplizierten Aufbau und zu entsprechend kostenintensiven Lösungen.

US 5,711,514 zeigt einen Fahrradstoßdämpfer umfassend einen Zylinderkörper, der einen abgedichteten Raum begrenzt, und ein Ventilelement, welches bewegbar in dem Zylinderkörper angeordnet ist und den abgedichteten Raum des Zylinderkörpers in eine Luftkammer und eine Fluidkammer unterteilt. Eine Kolbenwelle weist einen Verbindungsabschnitt auf, welcher sich in die Fluidkammer erstreckt, und ein Kolben wird an dem Verbindungsabschnitt der Kolbenwelle gehalten und ist mit einer Mehrzahl von sich axial erstreckenden Fluidlöchern durch diese ausgebildet. Ein Rückstellelement ist außerhalb des Zylinderkörpers angeordnet und ist mit der Kolbenwelle und dem Zylinderkörper verbunden, um den Kolbenschaft außerhalb des Zylinderkörpers vorzuspannen.

Es ist Aufgabe der Erfindung eine gattungsgemäße Fahrzeugschwingungsvorrichtung zu schaffen, mittels welcher speziell die vorgenannten Nachteile beseitigt werden.

Die Aufgabe der Erfindung wird von einer Fahrzeugschwingungsvorrichtung mit die Merkmale des Anspruchs 1 gelöst.

Erfindungsgemäß werden die Stabilisierungseinrichtung und die Dämpfereinrichtung miteinander kombiniert, wodurch die Anzahl der erforderlichen Bauteile in der Fahrzeugschwingungsvorrichtung erheblich reduziert werden kann.

Wird die Stabilisierungseinrichtung innerhalb der Dämpfereinrichtung untergebracht, also ins Innere der Dämpfereinrichtung integriert, kann eine besonders wartungsarme Feder-Dämpfer-Einheit bereitgestellt werden.

Die Fahrzeugschwingungsvorrichtung kann vorliegend sowohl Längs- als auch Seitenhorizontalfederungen aufweisen. Insofern ist es von Vorteil, wenn die erfindungsgemäße Fahrzeugschwingungsvorrichtung sowohl in Fahrzeuglängsrichtung als auch in Fahrzeugseitenrichtung wirken kann.

Nicht nur wegen Letzterem ist es vorteilhaft, wenn die Fahrzeugschwingungsvorrichtung mehr als eine Dämpfereinrichtung aufweist.

Wenn insbesondere die Federelemente zweier Dämpfereinrichtungen gegenüberstehend an der Fahrzeugschwingungsvorrichtung angeordnet sind, kann ein Kraft-Weg-Verhältnis an der Fahrzeugschwingungsvorrichtung konstruktiv einfach progressiv ausgelegt werden.

Aus diesem Grund ist es vorteilhaft, wenn wenigstens zwei Dämpfereinrichtungen gegenüberstehend an der Fahrzeugschwingungsvorrichtung angeordnet sind.

Die Erfindung sieht vor, dass die Stabilisierungseinrichtung, insbesondere das Federelement der Stabilisierungseinrichtung, innerhalb eines Arbeitsraums der Dämpfereinrichtung angeordnet ist.

Hierdurch kann die Fahrzeugschwingungsvorrichtung trotz Horizontaldämpfung vorteilhafter Weise sehr bauraumsparend gebaut werden.

Ist die Dämpfereinrichtung im Wesentlichen horizontal in oder zu einer Ebene angeordnet, welche von der Fahrzeuglängsrichtung und der Fahrzeugbreitenrichtung aufgespannt ist, kann die vorliegende Dämpfereinrichtung extrem flach in die Fahrzeugschwingungsvorrichtung integriert werden.

Die Aufgabe der Erfindung wird auch von einem Verfahren zum Stabilisieren einer im Wesentlichen horizontal schwingbaren Horizontalschwingungseinrichtung einer Fahrzeugschwingungsvorrichtung in einer Horizontalmittellage gelöst, bei welchem eine Federeinheit einer Dämpfereinrichtung die im Wesentlichen horizontal schwingbare Horizontalschwingungseinrichtung in der Mittelage stabilisiert.

Mit der erfindungsgemäßen Fahrzeugschwingungsvorrichtung sowie auch mit dem erfindungsgemäßen Verfahren kann vorteilhafter Weise ein in sich komplett ausgestattetes und gut auf den jeweiligen Einsatzbereich abgestimmtes Feder-Dämpfer-System bereitgestellt werden.

Die Federeinheit der erfindungsgemäßen Fahrzeugschwingungsvorrichtung umfasst erfindungsgemäß zwei Federelemente, mittels welchen insbesondere ein Kolben einer Schubstange der Dämpfereinrichtung innerhalb eines Gehäuses der Dämpfereinrichtung vorgespannt in einer Horizontalmittellage positioniert werden kann.

Insofern wird die Aufgabe der Erfindung auch von einer Verwendung einer Federeinheit eines Dämpfers zum Stabilisieren einer Horizontalschwingungseinrichtung einer Fahrzeugschwingungsvorrichtung in einer Horizontalmittellage gelöst.

Besonders vorteilhaft ist es, dass hinsichtlich der vorliegenden Dämpfereinrichtung nahezu immer auf einen Standarddämpfer zurückgegriffen werden kann. Insofern kann die Dämpfereinrichtung relativ kostengünstig beschafft werden, was sich vorteilhafter Weise auch günstig auf die Herstellungskosten der Fahrzeugschwingungsvorrichtung auswirkt.

Umfasst die Dämpfereinrichtung einen leerhubfreien Dämpfer mit oder ohne Trennkolben kann ein besonders komfortables Schwingungsverhalten an der Horizontalschwingungseinrichtung erzielt werden.

Es versteht sich, dass alternativ die Dämpfereinrichtung auch mit einem Zweirohrdämpfer ausgerüstet werden kann.

Auf die vorstehend beschriebenen Dämpfer, welche die Dämpfereinrichtung umfassen kann, wird hier nicht weiter eingegangen, da diese aus dem Stand der Technik bereits bekannt sind.

Vorzugsweise ist die Horizontalschwingungseinrichtung horizontal schwingbar gegenüber einer an der Fahrzeugschwingungsvorrichtung ortsfest angeordneten Fahrzeugkomponente gelagert.

Hinsichtlich eines besonders interessanten Einsatzbereiches ist es vorteilhaft, wenn die Horizontalschwingungseinrichtung eine Bauteilkomponente eines Fahrzeugsitzführungssystems oder eines Fahrzeugkabinenführungssystems umfasst.

Insofern wird nach einem weiteren Aspekt der Erfindung die vorliegende Aufgabe auch von einem Fahrzeugsitz oder einer Fahrgastzelle bzw. einer Fahrzeugkabine eines Fahrzeugs gelöst, welcher bzw. welche sich durch die vorliegend beschriebene Fahrzeugschwingungsvorrichtung auszeichnet.

Weitere Vorteile, Ziele und Eigenschaften vorliegender Erfindung werden anhand anliegender Zeichnung und deren Beschreibung erläutert, in welchen beispielhaft erfindungsgemäße Fahrzeugschwingungsvorrichtungen dargestellt und beschrieben sind.

Es zeigen:
- Figur 1: schematisch eine teilweise geschnittene Ansicht einer Fahrzeugschwingungsvorrichtung mit einem leerhubfreien Dämpfer entlang einer Schnittlinie A-A des in der Figur 2 gezeigten leerhubfreien Dämpfers gemäß einer nicht beanspruchten Ausführungsform;
- Figur 2: schematisch eine Ansicht des in der Figur 1 gezeigten Dämpfers;
- Figur 3: schematisch eine teilweise geschnittene Ansicht eines leerhubfreien Dämpfers mit einem fliegenden Trennkolben für ein erfinderisches Verwendungsbeispiel in einer Fahrzeugschwingungsvorrichtung;
- Figur 4: schematisch ein Kraft-Weg-Diagramm einer Fahrzeugschwingungseinrichtung umfassend zwei Dämpfereinrichtungen mit zwei sich gegenüberstehenden Druckfedern; und
- Figur 5: schematisch eine Ansicht eines ersten konkreten Anwendungsbeispiels der Fahrzeugschwingungsvorrichtung an einem Fahrzeugsitz.

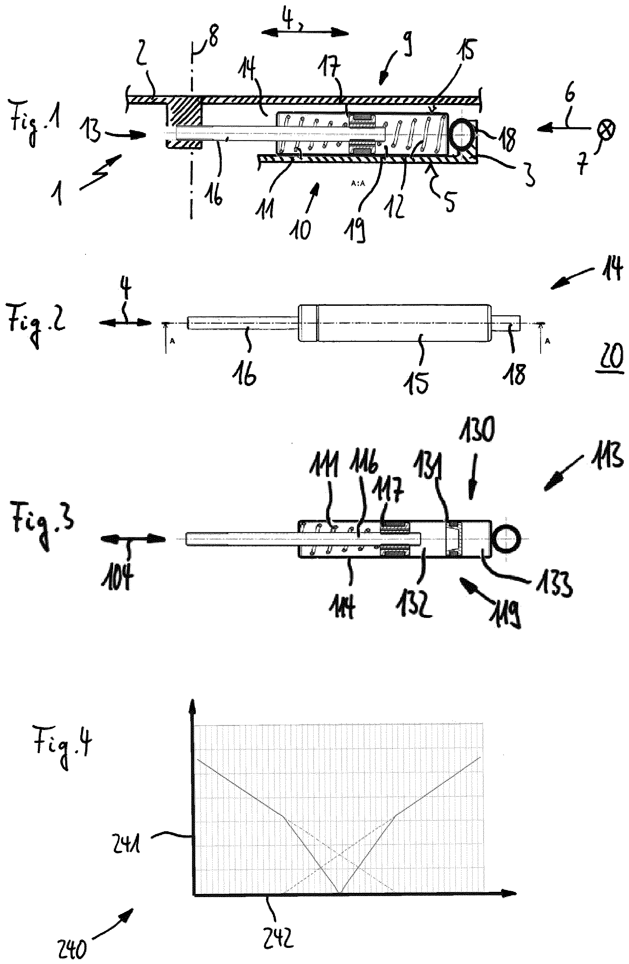

Die in der Figur 1 gezeigte Fahrzeugschwingungsvorrichtung 1 weist eine Horizontalschwingungseinrichtung 2 auf, welche gegenüber einer an der Fahrzeugschwingungsvorrichtung 1 ortsfest angeordneten Fahrzeugkomponente 3 mit einer Horizontalschwingrichtung 4 horizontal schwingbar gelagert ist.

Die Fahrzeugkomponente 3 ist in diesem nicht beanspruchten Ausführungsbeispiel ein Karosseriebauteil 5 eines hier nicht weiter illustrierten Fahrzeugs.

Die Horizontalschwingrichtung 4 fluchtet mit der Fahrzeuglängsrichtung 6, wobei die Pfeilspitze zur Fahrzeugvorderseite (hier nicht dargestellt) zeigend ausgerichtet ist. Die Fahrzeugbreitenrichtung 7 verläuft entsprechend senkrecht zur Papierebene.

Die Horizontalschwingungseinrichtung 2 ist durch den Aufbau der Fahrzeugschwingungsvorrichtung 1 derart gelagert, dass sie bei entsprechender Schwingungsanregung horizontal um eine Horizontalmittellage 8 schwingen kann. Um die Horizontalschwingungseinrichtung 2 in dieser Horizontalmittellage 8 stabilisieren zu können, weist die Fahrzeugschwingungsvorrichtung 1 eine Einrichtung 9 zur Stabilisierung mit einer Federeinheit 10 aus einem ersten Federelement 11 und einem zweiten Federelement 12 auf.

Die Stabilisierungseinrichtung 9 ist in einer Dämpfereinrichtung 13 der Fahrzeugschwingungsvorrichtung 1 integriert.

Die Dämpfereinrichtung 13 umfasst in diesem Ausführungsbeispiel einen konventionellen, leerhubfreien Öl-Hydraulik-Dämpfer 14 mit einem Gehäuse 15, einer darin durch die Federelemente 11 und 12 vorgespannten Kolbenstange 16 einschließlich Kolbenplatte 17. Insofern können die Stabilisierungseinrichtung 9 und die Dämpfereinrichtung 13 kostengünstig als Standard-Zubehörbauteil realisiert werden.

Der Öl-Hydraulik-Dämpfer 14 ist mit seiner Kolbenstange 16 an der Horizontalschwingungseinrichtung 2 und mit seinem Gehäuse 15 über ein Ringgelenk 18 an dem Karosseriebauteil 5 befestigt.

Da die Stabilisierungseinrichtung 9, insbesondere die Federelemente 11 und 12 der Stabilisierungseinrichtung 9, vorteilhafter Weise innerhalb eines Arbeitsraums 19 der Dämpfereinrichtung 13 bzw. des Öl-Hydraulik-Dämpfers 14 angeordnet ist, kann eine Feder-Dämpfer-Einheit einerseits bauteilreduzierend und andererseits besonders platzsparend innerhalb der Fahrzeugschwingungsvorrichtung 1 integriert werden.

Die Bauteilreduzierung ergibt sich jedoch nicht nur allein daraus, dass die Stabilisierungseinrichtung 9 in der Dämpfereinrichtung 13 integriert ist. Vielmehr ergibt sie sich auch aus dem Wegfall peripherer Mechaniken, da insbesondere Federelemente und Dämpferelemente in einer Gestellkonstruktion nicht mehr separat gelagert bzw. angelenkt werden müssen. Hierdurch wird zusätzlich eine schlankere Bauweise der Fahrzeugschwingungsvorrichtung 1 erzielt.

Die Dämpfereinrichtung 13 liegt in diesem Ausführungsbeispiel zudem im Wesentlichen horizontal in einer von der Fahrzeuglängsrichtung 6 und der Fahrzeugbreitenrichtung 7 aufgespannten Ebene, so dass die Fahrzeugschwingungsvorrichtung 1 besonders flach, also mit geringer Bauhöhe, bereitgestellt werden kann.

Ist die Horizontalschwingungseinrichtung 2 etwa beim Überfahren einer Bodenwelle in Horizontalschwingrichtung 4 ausgelenkt worden, kann sie mit Hilfe Federkräfte der Stabilisierungseinrichtung 9 wieder in die Horizontalmittellage 8 eingependelt und dort stabilisiert werden. Und mittels des Öl-Hydraulik-Dämpfers 14 wird die Gefahr eines kritischen Aufschaukeins der Horizontalschwingungseinrichtung 2 verringert.

Gemäß der Darstellung nach der Figur 2 ist der Öl-Hydraulik-Dämpfer 14 nochmals in seiner Kompaktheit von Außen gezeigt, wobei die innenliegende Stabilisierungseinrichtung 9 (siehe Figur 1) durch das Gehäuse 15 vor negativen Einflüssen, wie etwa Schmutz und/oder Feuchtigkeit, aus der Umgebung 20 besonders gut geschützt ist. Rechts am Gehäuse 15 ist das Ringgelenk 18 zu sehen, während links die Kolbenstange 16 aus dem Gehäuse 15 hinausragt.

Die in der Figur 3 gezeigte erfindungsgemäße Dämpfereinrichtung 113 umfasst einen konventionellen, leerhubfreien Öl-Gas-Dämpfer 114 mit einem Gasfederelement 130 und einem mechanischen Federelement 111.

Das Gasfederelement 130 und das mechanische Federelement 111 gestalten in diesem erfindungsgemäßen Ausführungsbeispiel eine Stabilisierungseinrichtung 109 der Dämpfereinrichtung 113 aus.

Insofern eignet sich auch diese weitere Dämpfereinrichtung 113 für einen alternativen Einbau in die Fahrzeugschwingungseinrichtung 1 (siehe Figur 1).

Der Arbeitsraum 119 des Öl-Gas-Dämpfers 114 ist durch einen fliegenden Trennkolben 131 in einen Ölraum 132 und einen Gasdruckraum 133 unterteilt. Durch den in dem Gasdruckraum 133 vorhandenen Gasdruck kann der fliegende Trennkolben 131 einer in Horizontalschwingrichtung 104 bewegten Kolbenstange 116 bzw. Kolbenplatte 117 der Kolbenstange 116 besonders gut folgen. Zudem können Temperaturschwankungen an der Dämpfereinrichtung 113 mittels der Gasdruckfeder 130 sehr gut ausgeglichen werden.

Insgesamt kann mit der in der Figur 3 gezeigten Dämpfereinrichtung 113 ein nochmals verbesserter Feder-Dämpfungskomfort an einer Fahrzeugschwingungsvorrichtung erzielt werden.

Es versteht sich, dass auch mehrere Dämpfereinrichtungen 13 oder 113 gleichzeitig und vorteilhaft zusammenwirkend an der Fahrzeugschwingungsvorrichtung 1 (siehe Figur 1) vorgesehen sein können.

Bei dem in der Figur 4 gezeigten Kraft-Weg-Diagramm 240 sind hierzu entsprechende Kennlinien eingezeichnet, wobei an der Abszisse 241 Werte zu einem Weg s in mm und an der Ordinate 242 Werte zu einer Kraft in N abgetragen sind.

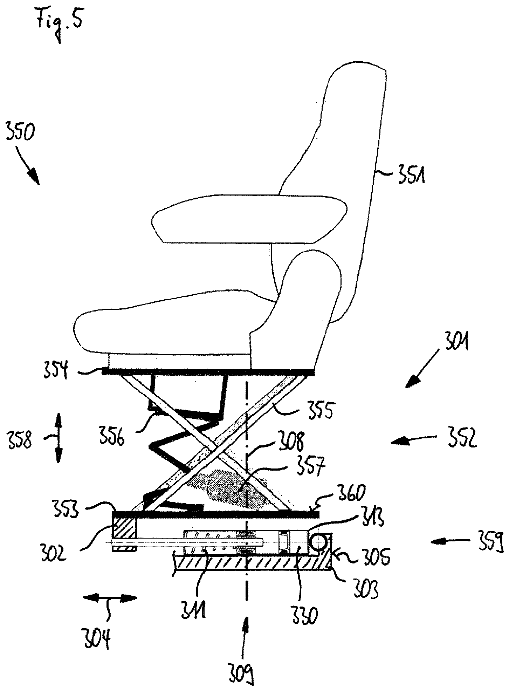

Bei dem in der Figur 5 gezeigten ersten konkreten Anwendungs- bzw. Einbaubeispiel ist ein Fahrzeugsitzführungssystem 350 eines Fahrzeugsitzes 351 mit einer erfindungsgemäßen Fahrzeugschwingungsvorrichtung 301 ausgestattet.

Die Fahrzeugschwingungsvorrichtung 301 hat hierbei oberseitig zusätzlich einen Vertikalfunktionsteil 352 mit einer Bodenplatte 353, einer Sitzplatte 354, einem Scherengestell 355, einer Spiralfeder 356, und einem Dämpfer 357. Der Vertikalfunktionsteil 352 ist für die Handhabung von Vertikalschwingungen 358 an der Fahrzeugschwingungsvorrichtung 301 verantwortlich.

Unterseitig verfügt die Fahrzeugschwingungsvorrichtung 301 für die Beherrschung von Schwingungen in Horizontalrichtung 304 über ein Horizontalfunktionsteil 359. Im Bereich des Horizontalfunktionsteils 359 weist die Fahrzeugschwingungseinrichtung 301 oben eine Horizontalschwingungseinrichtung 302, unten eine Fahrzeugkomponente 303 in Gestalt eines Karosseriebauteils 305 und dazwischen eine Stabilisierungseinrichtung 309 mit einem mechanischen Federelement 311 und mit einem Gasfederelement 330 zum Stabilisieren einer Horizontalmittellage 308 sowie eine Dämpfereinrichtung 313, in welcher die Stabilisierungseinrichtung 309 integriert ist, auf.

Bei diesem Ausführungsbeispiel ist die Bodenplatte 353 ein Bestandteil der Horizontalschwingungseinrichtung 302. Insofern umfasst die Horizontalschwingungseinrichtung 302 eine Bauteilkomponente 360 des Vertikalfunktionsteils 352 des Fahrzeugsitzführungssystems 350.

Die Dämpfereinrichtung 313 weist im Übrigen den gleichen Aufbau wie die Dämpfereinrichtung 113 aus der Figur 3 auf, so dass an dieser Stelle auf eine weiterführende Erläuterung hinsichtlich Aufbau und Funktion verzichtet wird.

Vergleicht man die wesentlichen Bauteile des Vertikalfunktionsteils 352 mit denen des Horizontalfunktionsteils 359 ist gut zu erkennen, dass letzterer wesentlich schlanker baut, da die Stabilisierungseinrichtung 309 - im Gegensatz zu der separaten Spiralfeder 356 und dem separaten Dämpfer 357 des Vertikalfunktionsteils 352 - vorteilhaft in der Dämpfereinrichtung 113 integriert ist. Insofern wird die zu verbauende Anzahl der eigenständigen Bauteile reduziert, wodurch vorteilhafter Weise insbesondere Bauraum eingespart werden kann.

Es versteht sich, dass es sich bei den vorstehend erläuterten Ausführungsbeispielen lediglich um erste Ausgestaltungen der erfindungsgemäßen Fahrzeugschwingungsvorrichtung handelt. Insofern beschränkt sich die Ausgestaltung der Erfindung nicht auf die gezeigten Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### B zugszeichenliste

- 1: Fahrzeugschwingungsvorrichtung
- 2: Horizontalschwingungseinrichtung
- 3: Fahrzeugkomponente
- 4: Horizontalschwingrichtung
- 5: Karosseriebauteil
- 6: Fahrzeuglängsrichtung
- 7: Fahrzeugbreitenrichtung
- 8: Horizontalmittellage
- 9: Stabilisierungseinrichtung
- 10: Federeinheit
- 11: erstes Federelement
- 12: zweites Federelement
- 13: Dämpfereinrichtung
- 14: Öl-Hydraulik-Dämpfer
- 15: Gehäuse
- 16: Kolbenstange
- 17: Kolbenplatte
- 18: Ringgelenk
- 19: Arbeitsraum
- 20: Umgebung

- 104: Horizontalschwingrichtung
- 109: Stabilisierungseinrichtung
- 111: Federelement
- 113: Dämpfereinrichtung
- 114: Öl-Gas-Dämpfer
- 115: Gehäuse
- 116: Kolbenstange
- 117: Kolbenplatte
- 118: Ringgelenk
- 119: Arbeitsraum
- 130: Gasfederelement
- 131: fliegender Trennkolben
- 132: Ölraum
- 133: Gasdruckraum

- 240: Kraft-Weg-Diagramm
- 241: Abszisse
- 242: Ordinate

- 301: Fahrzeugschwingungsvorrichtung
- 302: Horizontalschwingungseinrichtung
- 303: Fahrzeugkomponente
- 304: Horizontalschwingrichtung
- 305: Karosseriebauteil
- 308: Horizontalmittellage
- 309: Stabilisierungseinrichtung
- 311: mechanisches Federelement
- 313: Dämpfereinrichtung
- 330: Gasfederelement
- 350: Fahrzeugsitzführungssystem
- 351: Fahrzeugsitz
- 352: Vertikalfunktionsteil
- 353: Bodenplatte
- 354: Sitzplatte
- 355: Scherengestell
- 356: Spiralfeder
- 357: Dämpfer
- 358: Vertikalschwingungen
- 359: Horizontalfunktionsteil
- 360: Bauteilkomponente

## Patentansprüche

1. Fahrzeugschwingungsvorrichtung (1) mit einer Horizontalschwingungseinrichtung (2) und mit einer Stabilisierungseinrichtung (109) zur Stabilisierung einer Horizontalmittellage (8) der Horizontalschwingungseinrichtung (2), bei welcher die Horizontalschwingungseinrichtung (2) in Fahrzeuglängsrichtung (6) und/oder in Fahrzeugbreitenrichtung (7) horizontal schwingbar angeordnet ist und bei welcher die Stabilisierungseinrichtung (109) ein Federelement (111, 130) umfasst,
wobei die Stabilisierungseinrichtung (109) ein erstes und ein zweites Federelement (111, 130) umfasst, wobei die beiden Federelemente (111, 130) eine Kolbenstange (116) mit einer gemeinsamen Kolbenplatte (117) in einem Gehäuse (15) vorspannen, wobei das erste Federelement (111) als ein mechanisches Federelement und das zweite Federelement (130) als ein Gasfederelement ausgestaltet ist und **dadurch gekennzeichnet, dass** die Stabilisierungseinrichtung (109) in einer Dämpfereinrichtung (113) der Fahrzeugschwingungsvorrichtung (1) integriert ist.

2. Fahrzeugschwingungsvorrichtung (1) nach Anspruch 1,
**dadurch gekennzeichnet, dass**
die Stabilisierungseinrichtung (9), insbesondere das Federelement (11, 12) der Stabilisierungseinrichtung (9), innerhalb eines Arbeitsraums (19) der Dämpfereinrichtung (13) angeordnet ist.

3. Fahrzeugschwingungsvorrichtung (1) nach Anspruch 1 oder 2,
**dadurch gekennzeichnet, dass**
die Fahrzeugschwingungsvorrichtung (1) mehr als eine Dämpfereinrichtung (13) aufweist, welche insbesondere gegenüberstehend an der Fahrzeugschwingungsvorrichtung (1) angeordnet sind.

4. Fahrzeugschwingungsvorrichtung (1) nach einem der Ansprüche 1 bis 3,
**dadurch gekennzeichnet, dass**
die Dämpfereinrichtung (13) im Wesentlichen horizontal in oder zu einer Ebene angeordnet ist, welche von der Fahrzeuglängsrichtung (6) und der Fahrzeugbreitenrichtung (7) aufgespannt ist.

5. Fahrzeugschwingungsvorrichtung (1) nach einem der Ansprüche 1 bis 4,
**dadurch gekennzeichnet, dass**
die Dämpfereinrichtung (13; 113) einen leerhubfreien Dämpfer (14; 114) mit Trennkolben (131) umfasst.

6. Fahrzeugschwingungsvorrichtung (1) nach einem der Ansprüche 1 bis 4,
**dadurch gekennzeichnet, dass**
die Dämpfereinrichtung (13) einen Zweirohrdämpfer umfasst.

7. Fahrzeugschwingungsvorrichtung (1) nach einem der Ansprüche 1 bis 6,
**dadurch gekennzeichnet, dass**
die Horizontalschwingungseinrichtung (2) horizontal schwingbar gegenüber einer an der Fahrzeugschwingungsvorrichtung (1) ortsfest angeordneten Fahrzeugkomponente (3) gelagert ist.

8. Fahrzeugschwingungsvorrichtung (1; 301) nach einem der Ansprüche 1 bis 7,
**dadurch gekennzeichnet, dass**
die Horizontalschwingungseinrichtung (2; 302) eine Bauteilkomponente (360) eines Fahrzeugsitzführungssystems (350) oder eines Fahrzeugkabinenführungssystems umfasst.

9. Fahrzeugsitz (351) oder Fahrgastzelle bzw. Fahrzeugkabine eines Fahrzeugs,
**dadurch gekennzeichnet, dass**
eine Fahrzeugschwingungsvorrichtung (1; 351) nach einem der Ansprüche 1 bis 8.

10. Verfahren zum Stabilisieren einer im Wesentlichen horizontal schwingbaren Horizontalschwingungseinrichtung (2) einer Fahrzeugschwingungsvorrichtung (1) in einer Horizontalmittellage (8), bei welchem eine Stabilisierungseinrichtung (109) einer Dämpfereinrichtung (13) die im Wesentlichen horizontal schwingbare Horizontalschwingungseinrichtung (2) in der Horizontalmittelage (8) stabilisiert, wobei die die Stabilisierungseinrichtung (109) in einer Dämpfereinrichtung (113) der Fahrzeugschwingungsvorrichtung (1) integriert ist und die Stabilisierungseinrichtung (109) ein erstes und ein zweites Federelement (111, 130) umfasst, so dass die beiden Federelemente (111, 130) eine Kolbenstange (116) mit einer gemeinsamen Kolbenplatte (117) innerhalb einem Gehäuse (15) vorspannen, wobei das erste Federelement (111) als ein mechanisches Federelement und das zweite Federelement (130) als ein Gasfederelement ausgestaltet sind.

## Claims

1. Vehicle vibration device (1) comprising a horizontal vibration means (2) and comprising a stabilisation means (109) for stabilising a horizontal central position (8) of the horizontal vibration means (2), in which the horizontal vibration means (2) is arranged so as to be able to vibrate horizontally in the vehicle longitudinal direction (6) and/or in the vehicle width direction (7), and in which the stabilisation means (109) comprises a spring element (111, 130),
the stabilisation means (109) comprising a first and a second spring element (111, 130), the two spring elements (111, 130) preloading a piston rod (116) having a common piston plate (117) in a housing (15), the first spring element (111) being designed as a mechanical spring element and the second spring element (130) being designed as a gas spring element, and **characterised in that** the stabilisation means (109) is integrated in a damping means (113) of the vehicle vibration device (1).

2. Vehicle vibration device (1) according to claim 1,
**characterised in that**
the stabilisation means (9), in particular the spring element (11, 12) of the stabilisation means (9), is arranged inside a working chamber (19) of the damping means (13).

3. Vehicle vibration device (1) according to either claim 1 or claim 2,
**characterised in that**
the vehicle vibration device (1) has more than one damping means (13), which are arranged in particular opposite one another on the vehicle vibration device (1).

4. Vehicle vibration device (1) according to any of claims 1 to 3,
**characterised in that**
the damping means (13) is arranged substantially horizontally in or with respect to a plane which is spanned by the vehicle longitudinal direction (6) and the vehicle width direction (7).

5. Vehicle vibration device (1) according to any of claims 1 to 4,
**characterised in that**
the damping means (13; 113) comprises a positive damper (14; 114) comprising separating pistons (131).

6. Vehicle vibration device (1) according to any of claims 1 to 4,
**characterised in that**
the damping means (13) comprises a twin-tube damper.

7. Vehicle vibration device (1) according to any of claims 1 to 6,
**characterised in that**
the horizontal vibration means (2) is mounted so as to be able to vibrate horizontally with respect to a vehicle component (3) which is immovably arranged on the vehicle vibration device (1).

8. Vehicle vibration device (1; 301) according to any of claims 1 to 7,
**characterised in that**
the horizontal vibration means (2; 302) comprises a part (360) of a vehicle seat guide system (350) or of a vehicle cabin guide system.

9. Vehicle seat (351), or interior or vehicle cabin of a vehicle,
**characterised in that**
a vehicle vibration device (1; 351) according to any of claims 1 to 8.

10. Method for stabilising a horizontal vibration means (2) of a vehicle vibration device (1) in a horizontal central position (8), which means can vibrate substantially horizontally, in which a stabilisation means (109) of a damping means (13) stabilises the horizontal vibration means (2), which can vibrate substantially horizontally, in the horizontal central position (8), wherein the stabilisation means (109) is integrated in a damping means (113) of the vehicle vibration device (1) and the stabilisation means (109) comprises a first and a second spring element (111, 130), such that the two spring elements (111, 130) preload a piston rod (116) having a common piston plate (117) inside a housing (15), wherein the first spring element (111) is designed as a mechanical spring element and the second spring element (130) is designed as a gas spring element.

## Revendications

1. Dispositif d'oscillation de véhicule (1) comportant un moyen d'oscillation horizontale (2) et un moyen de stabilisation (109) pour stabiliser une position médiane horizontale (8) du moyen d'oscillation horizontale (2), dans lequel le dispositif d'oscillation horizontale (2) est disposé apte à osciller horizontalement dans la direction longitudinale de véhicule (6) et/ou dans la direction de la largeur de véhicule (7) et dans lequel le moyen de stabilisation (109) comporte un élément ressort (111, 130),
dans lequel le moyen de stabilisation (109) comporte un premier et un second élément ressort (111, 130), dans lequel les deux éléments ressorts (111, 130) préchargent une tige de piston (116) avec un plateau de piston commun (117) dans un boîtier (15), dans lequel le premier élément ressort (111) est conçu en tant qu'élément ressort mécanique, et le second élément ressort (130), en tant qu'élément ressort à gaz et **caractérisé par le fait que** le moyen de stabilisation (109) est intégré dans un moyen d'amortissement (113) du dispositif d'oscillation de véhicule (1).

2. Dispositif d'oscillation de véhicule (1) selon la revendication 1,
**caractérisé par le fait que**
le moyen de stabilisation (9), en particulier l'élément ressort (11, 12) du moyen de stabilisation (9), est disposé à l'intérieur d'une chambre de travail (19) du moyen d'amortissement (13).

3. Dispositif d'oscillation de véhicule (1) selon l'une des revendications 1 ou 2,
**caractérisé par le fait que**
le dispositif d'oscillation de véhicule (1) présente plus d'un moyen d'amortissement (13), lesquels sont disposés en particulier à l'opposé l'un de l'autre sur le dispositif d'oscillation de véhicule (1).

4. Dispositif d'oscillation de véhicule (1) selon l'une des revendications 1 à 3,
**caractérisé par le fait que**
le moyen d'amortissement (13) est disposé sensiblement horizontalement dans ou par rapport à un plan, lequel est défini par la direction longitudinale de véhicule (6) et la direction de la largeur de véhicule (7).

5. Dispositif d'oscillation de véhicule (1) selon l'une des revendications 1 à 4,
**caractérisé par le fait que**
le moyen d'amortissement (13 ; 113) comporte un amortisseur sans course à vide (14 ; 114) ayant un piston de séparation (131).

6. Dispositif d'oscillation de véhicule (1) selon l'une des revendications 1 à 4,
**caractérisé par le fait que**
le moyen d'amortissement (13) comporte un amortisseur à deux tubes.

7. Dispositif d'oscillation de véhicule (1) selon l'une des revendications 1 à 6,
**caractérisé par le fait que**
le moyen d'oscillation horizontale (2) est monté apte à osciller horizontalement par rapport à un composant de véhicule disposé fixe sur le dispositif d'oscillation de véhicule (1).

8. Dispositif d'oscillation de véhicule (1 ; 301) selon l'une des revendications 1 à 7,
**caractérisé par le fait que**
le moyen d'oscillation horizontale (2 ; 302) comporte un composant d'assemblage (360) d'un système de guidage de siège de véhicule (350) ou d'un système de guidage de cabine de véhicule.

9. Siège de véhicule (351) ou cellule passager ou cabine de véhicule d'un véhicule,
**caractérisé par**
un dispositif d'oscillation de véhicule (1 ; 351) selon l'une des revendications 1 à 8.

10. Procédé de stabilisation d'un moyen d'oscillation horizontale (2) d'un dispositif d'oscillation de véhicule (1), apte à osciller sensiblement horizontalement, dans une position médiane horizontale (8), dans lequel un moyen de stabilisation (109) d'un moyen d'amortissement (13) stabilise le moyen d'oscillation horizontale (2) apte à osciller sensiblement horizontalement dans la position médiane horizontale (8), dans lequel le moyen de stabilisation (109) est intégré dans un moyen d'amortissement (113) du dispositif d'oscillation de véhicule (1) et le moyen de stabilisation (109) comporte un premier et un second élément ressort (111, 130), de telle sorte que les deux éléments ressorts (111, 130) préchargent une tige de piston (116) avec un plateau de piston commun (117) dans un boîtier (15), dans lequel le premier élément ressort (111) est conçu en tant qu'élément ressort mécanique, et le second élément ressort (130), en tant qu'élément ressort à gaz.
